(19) Europäisches Patentamt
European Patent Office
Office européen des brevets

(11) **EP 4 692 595 A1**

(12) **EUROPÄISCHE PATENTANMELDUNG**

(43) Veröffentlichungstag:
**11.02.2026  Patentblatt 2026/07**

(21) Anmeldenummer: **25187204.0**

(22) Anmeldetag: **03.07.2025**

(51) Internationale Patentklassifikation (IPC):
**F16H 7/14** *(2006.01)*     **A01D 41/14** *(2006.01)*

(52) Gemeinsame Patentklassifikation (CPC):
**F16H 7/14; A01D 41/142;** F16H 2007/0806;
F16H 2007/0887; F16H 2007/0893;
F16H 2007/0895

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **05.08.2024  DE 102024122298**

(71) Anmelder: **CLAAS Selbstfahrende
Erntemaschinen GmbH
33428 Harsewinkel (DE)**

(72) Erfinder: **Sleuwen, Johann-Kuno
49086 Osnabrück (DE)**

(74) Vertreter: **CLAAS Gruppe
Mühlenwinkel 1
33428 Harsewinkel (DE)**

(54) **LANDWIRTSCHAFTLICHE ARBEITSMASCHINE**

(57)     Die vorliegende Erfindung betrifft eine landwirtschaftliche Arbeitsmaschine (1), insbesondere Mähdrescher, umfassend
- mindestens ein Arbeitsorgan (2) zur Durchführung eines Arbeitsschrittes,
- mindestens einen hydraulischen Antrieb (3) mit mindestens einer Hydraulikpumpe (29) zum Antreiben des mindestens eines Arbeitsorgans (2),
- mindestens einen dynamisch spannbaren Riemenantrieb (5) zum Antrieb der Hydraulikpumpe (29), wobei der Riemenantrieb (5)
- mindestens eine Antriebsscheibe (6) und mindestens eine Abtriebsscheibe (7) sowie mindestens einen die Antriebsscheibe (6) mit der Abtriebsscheibe (7) verbindenden und die beiden Scheiben (6, 7) umlaufenden Riemen (8) umfasst,
- wobei der Riemen (8) mit einer Riemenspannung um die beiden Scheiben (6, 7) gespannt ist,
- wobei die Antriebsscheibe (6) drehbar um eine Antriebsdrehachse (9) und die Abtriebsscheibe (7) drehbar um eine Abtriebsdrehachse (10) gelagert sind.
     Um eine landwirtschaftliche Arbeitsmaschine (1) bereitzustellen, bei dem ein Riemenverschleiß des Riemens (8) des Riemenantriebs verringert ist, ist erfindungsgemäß vorgesehen, dass die Riemenspannung in Abhängigkeit von einer durch den Riemen (8) übertragenen Last automatisch veränderbar ist.

Fig. 5

**Beschreibung**

Die vorliegende Erfindung betrifft eine landwirtschaftliche Arbeitsmaschine, insbesondere einen Mähdrescher.

Die landwirtschaftliche Arbeitsmaschine weist mindestens ein Arbeitsorgan zur Durchführung eines Arbeitsschritts auf. Um das Arbeitsorgan antreiben zu können, weist die landwirtschaftliche Arbeitsmaschine mindestens einen hydraulischen Antrieb mit mindestens einer Hydraulikpumpe auf. Um wiederum die Hydraulikpumpe antreiben zu können, ist der landwirtschaftlichen Arbeitsmaschine mindestens ein dynamisch spannbarer Riemenantrieb zugeordnet. Der Riemenantrieb weist dabei mindestens eine drehbar gelagerte Antriebsscheibe, mindestens eine drehbar gelagerte Abtriebsscheibe sowie mindestens einen Riemen auf, wobei letzterer die Antriebsscheibe mit der Abtriebsscheibe verbindet und die beiden Scheiben, d.h. sowohl die Antriebsscheibe als auch die Abtriebsscheibe, umläuft. Bei Rotation der Antriebsscheibe wird das eingeleitete Drehmoment mittels des Riemens auf die Abtriebsscheibe übertragen.

Um dies ständig, und auch unter erschwerten Erntebedingungen zu ermöglichen, ist eine für die jeweilige Leistungsübertragung notwendige Spannung des Riemens erforderlich, die auch als Riemenspannung bezeichnet wird. Der Riemen, der wiederum ein Lasttrum und ein Leertrum aufweist, ist mithin mit der Riemenspannung um die beiden Scheiben gespannt, wobei die Riemenspannung an die jeweilige Situation, insbesondere bei Erhöhung einer zu übertragenden Last, angepasst werden muss.

Derartige Riemenantriebe sind bereits in einer Vielzahl aus dem Stand der Technik bekannt. So beschreibt beispielsweise die DE 103 12 321 A1 einen Riementrieb mit einem Riemenspanner zur Bereitstellung einer für den Betrieb unter erschwerten Bedingungen geeigneten Spannung des Riemens des Riemenantriebs. Die erforderliche Riemenspannung wird dabei von einer Druckfeder erzeugt, deren Vorspannung wiederum über eine Stellmutter einstellbar ist. Die Riemenspannung muss dabei auf die maximal zu übertragende Leistung abgestimmt sein. In Betriebspunkten, wo geringere Leistungen vom Arbeitsorgan benötigt werden, ist eine solch hohe Spannung jedoch nicht nötig. Eine Reduzierung der Riemenspannung kann jedoch lediglich mittels Verstellen der Stellmutter, d.h. händisch, bewirkt werden.

Die Nachteile bekannter Riemenantriebe liegen mithin darin, dass die Riemenspanner für eine maximal zu übertragende Last abgestimmt sind, auch wenn dieser Lastzustand nur in wenigen Betriebssituationen auftritt. Hieraus resultieren ein erhöhter Riemenverschleiß und eine verringerte Energieeffizienz.

Der vorliegenden Erfindung liegt mithin die Aufgabe zugrunde, eine landwirtschaftliche Arbeitsmaschine bereitzustellen, bei dem der Verschleiß des Riemens des Riemenantriebs verringert ist.

Die vorstehend genannte Aufgabe wird erfindungsgemäß mittels einer landwirtschaftlichen Arbeitsmaschine mit den Merkmalen des Anspruchs 1 gelöst. Vorteilhafte Ausgestaltungen sind Gegenstand der Unteransprüche.

Die landwirtschaftliche Arbeitsmaschine zeichnet sich dadurch aus, dass die Riemenspannung in Abhängigkeit von einer durch den Riemen übertragenen Last automatisch veränderbar ist. Mit anderen Worten verändert sich die Riemenspannung ohne händisches Zutun eines Bedieners der landwirtschaftlichen Arbeitsmaschine.

Die erfindungsgemäße Arbeitsmaschine hat viele Vorteile. Insbesondere wird durch die automatische Anpassung der Riemenspannung gewährleistet, dass der Riemen stets nur in dem jeweilig erforderlichen Maße gespannt ist. In Betriebspunkten, wo geringere Leistungen von einem Arbeitsorgan der landwirtschaftlichen Arbeitsmaschine benötigt werden, kann der Riemen mit einer geringeren Riemenspannung gespannt sein, als in Betriebspunkten, in denen eine Eckleistung von dem Arbeitsorgan abgerufen wird. Vorteilhafterweise erfolgt die Anpassung der Riemenspannung dabei stets in Abhängigkeit der durch den Riemen übertragenen Last. Die Riemenspannung ist mithin stets an die in den jeweiligen Betriebspunkten vorliegenden Bedingungen angepasst. Auf diese Weise wird der Riemen nicht auf unnötige Weise strapaziert. Ein Verschleiß des Riemens kann mithin deutlich reduziert werden, wodurch seine Lebensdauer erhöht wird.

Eine vorzugsweise Ausgestaltung der Erfindung sieht dabei vor, dass sich die Riemenspannung bei einer Erhöhung der übertragenen Last erhöht und bei einer Verringerung der übertragenen Last verringert. Auf diese Weise kann verhindert werden, dass der Riemen bei einer Erhöhung der auf Trume des Riemens wirkende Kräfte infolge eines Gleitschlupfs durchrutscht. Gleichermaßen wird gewährleistet, dass die Riemenspannung bei Wegfall oder bei Verringerung der zu übertragenden Last entsprechend anpassbar ist.

Vorzugsweise kann die Abtriebsscheibe verschwenkbar um eine Zwischendrehachse gelagert sein, wobei die Zwischendrehachse zwischen einer von dem Lasttrum gebildeten ersten Geraden und einer die Antriebsdrehachse und die Abtriebsdrehachse verbindenden zweiten Gerade angeordnet ist, sodass in Folge einer Erhöhung des von dem Riemen übertragenden Drehmoments ein Abstand zwischen der Antriebsdrehachse und der Abtriebsdrehachse veränderbar ist, sodass die Riemenspannung in Abhängigkeit des Drehmoments veränderbar ist.

Mit anderen Worten bewirkt eine Erhöhung des von der Antriebsscheibe eingeleiteten Drehmoments ein auf die Abtriebsscheibe wirkendes Drehmoment, das eine Verschwenkung der Abtriebsscheibe um die Zwischendrehachse zur Folge hat. Als Folge wird der Abstand zwischen der Antriebsdrehachse und der Abtriebsdrehachse vergrößert, wodurch die Riemenspannung erhöht wird. Die Abtriebsscheibe wird dabei ausgehend von einer Ausgangsposition in eine ausgelenkte Position überführt.

Dies wird dadurch ermöglicht, dass infolge der Einleitung einer erhöhten Nutzkraft in den Riemenantrieb eine an dem Lasttrum und dem Leertrum des Riemens wirkende Lasttrumkraft und Leertrumkraft erhöht bzw. verringert werden. Infolge der Anordnung der Zwischendrehachse zwischen den beiden Trumen bewirkt die Änderung der Kräfte eine Einleitung eines Drehmoments, welches eine Verschwenkung der Abtriebsscheibe um die Zwischendrehachse zur Folge hat. Ebenfalls infolge der vorbeschriebenen Anordnung hat die Verschwenkung der Abtriebsscheibe eine Vergrößerung des Abstands zwischen den beiden Scheiben zur Folge, wodurch sich die Riemenspannung erhöht.

Ebenso ist vorzugsweise vorgesehen, dass dieser Zustand bei Verringerung bzw. Wegfall der Nutzkraft teilweise bzw. vollständig aufgehoben wird, die Abtriebsscheibe mithin in die Ausgangsposition überführt wird, sodass der Abstand zwischen Abtriebsscheibe und Antriebsscheibe verringert und die Riemenspannung ebenfalls reduziert wird.

Gemäß einer vorzugsweisen Ausgestaltung der Erfindung ist vorgesehen, dass die Abtriebsscheibe mittels eines Halteelements verschwenkbar an der Zwischendrehachse gelagert ist. Das Halteelement bewirkt die Ausbildung eines Hebelarms, der in Verbindung mit der auf die Abtriebsscheibe wirkenden Kräfte ein Drehmoment in die Abtriebsscheibe einleitet.

Vorzugsweise kann ein Rückhalteelement vorgesehen sein, dass zur Fixierung der Abtriebsscheibe in einer Ausgangsposition bei Vorliegen des Riemenantriebs in einem lastfreien Zustand dient. Einerseits kann vorgesehen sein, dass bereits durch ein Eigengewicht der Abtriebsscheibe eine Verlagerung der Abtriebsscheibe aus ihrer Ausgangsposition hinaus verhindert ist. Hinzu kommt vorzugsweise ein Eigengewicht einer Pumpenwelle der Hydraulikpumpe sowie weiter vorzugsweise ein Eigengewicht des Halteelements, sofern dieses vorgesehen ist. Andererseits kann die Ausgangsposition der Abtriebsscheibe durch das Rückhalteelement fixiert werden. Eine Gemeinsamkeit der vorgenannten Maßnahmen besteht darin, dass diese verhindern sollen, dass sich die Abtriebsscheibe relativ zu der Antriebsscheibe bewegt und somit die Riemenspannung verändert oder gar dazu führt, dass der Riemen von den Scheiben abspringt.

Eine weitere vorzugsweise Ausgestaltung der Erfindung sieht vor, dass das Rückhalteelement in Form einer Spannfeder ausgebildet ist. Eine Spannfeder hat sich als besonders vorteilhaft für die Ausbildung eines Rückhalteelements erwiesen. Die Spannfeder wirkt aufgrund ihrer Vorspannung einer Rotation der Abtriebsscheibe entgegen. Vorzugsweise ist die Spannfeder einseitig in Kraft übertragender Weise mit dem Halteelement verbunden, um dieses in seiner Position zu fixieren.

Gemäß einer vorzugsweisen Ausgestaltung der Erfindung ist ferner vorgesehen, dass eine Pumpenwelle der Hydraulikpumpe an der Abtriebsscheibe angeordnet ist, sodass das von dem Riemenantrieb zur Verfügung gestellte Drehmoment auf die Pumpenwelle übertragbar und die Hydraulikpumpe somit antreibbar ist. Infolge einer derartigen Anordnung ist eine gesonderte Übertragung des Drehmoments von der Abtriebsscheibe auf die Pumpenwelle nicht nötig. Vielmehr wird dieses unmittelbar auf die Pumpenwelle übertragen.

Vorzugsweise kann vorgesehen sein, dass es sich bei dem von der Hydraulikpumpe anzutreibenden Arbeitsorgan um ein positionsveränderliches Arbeitsorgans der landwirtschaftlichen Arbeitsmaschine handelt. Unter einem "positionsveränderlichen Arbeitsorgans" wird ein solches verstanden, welches bei Betrieb der landwirtschaftlichen Arbeitsmaschine zwischen mindestens zwei Positionen überführbar ist.

Gemäß einer vorzugsweisen Ausgestaltung der Erfindung ist vorgesehen, dass es sich bei dem anzutreibenden Arbeitsorgan um einen Spreuverteiler der landwirtschaftlichen Arbeitsmaschine handelt, wobei der Spreuverteiler vorzugsweise zur Einstellung einer Auswurfrichtung verschwenkbeweglich ist. Die erforderliche Antriebsleistung des Spreuverteilers kann in Abhängigkeit eines Durchsatzes und der gewünschten Auswurfweite der auf dem Feld auszuwerfenden Spreu variieren. Mithin kann sich die erforderliche Antriebsleistung des Spreuverteilers in Abhängigkeit verschiedener Erntesituationen ändern, sodass die sich selbsttätig an die Lastsituation anpassende Riemenspannung hier besonders vorteilhaft ist..

Die Erfindung ist nachstehend anhand eines Ausführungsbeispiels, das in den Figuren dargestellt ist, näher erläutert. Es zeigt:

Fig. 1: Einen vertikalen Schnitt durch eine erfindungsgemäße landwirtschaftliche Arbeitsmaschine.

Fig. 2: Eine Detailansicht eines Riemenantriebs der landwirtschaftlichen Arbeitsmaschine aus Figur 1.

Fig. 3: Eine weitere Detailansicht des Riemenantriebs aus Figur 2.

Fig. 4: Eine Detailansicht im Bereich eine Spreuverteilers der landwirtschaftlichen Arbeitsmaschine aus Figur 1.

Fig. 5: Eine Detailansicht im Bereich einer Abtriebsscheibe des Riemenantriebs aus Figur 2.

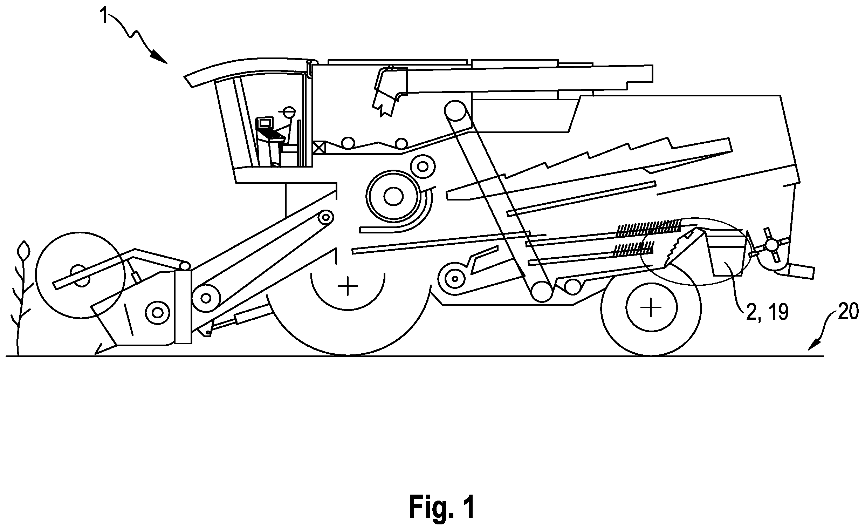

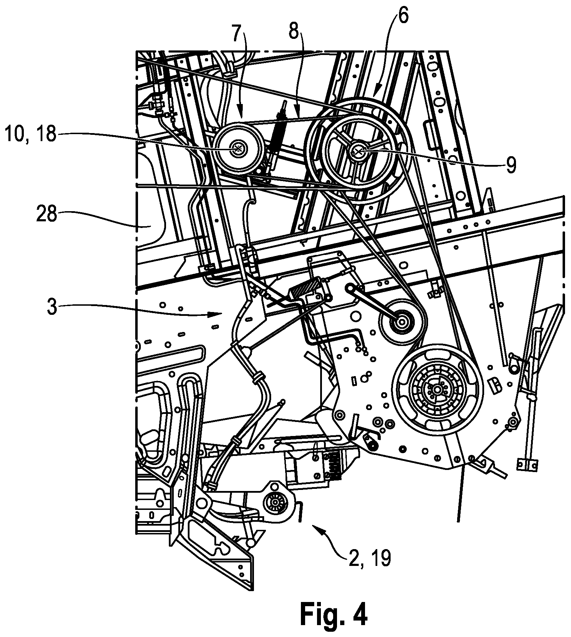

Eine erfindungsgemäße landwirtschaftliche Arbeitsmaschine 1, wie sie in **Figur 1** gezeigt ist, umfasst eine Mehrzahl von Arbeitsorganen 2 für die Vornahme eines von der landwirtschaftlichen Arbeitsmaschine 1 auszuführenden landwirtschaftlichen Arbeitsvorgans. Die in **Figur 1** gezeigte landwirtschaftliche Arbeitsmaschine 1 ist dabei als Mähdrescher zum Abernten eines Felds **20** ausgebildet. Hierbei nehmen die einzelnen Arbeitsorgane **2** jeweils einen Arbeitsschritt des Erntevorgangs vor. Die in der **Figur 1** gezeigte landwirtschaftliche Arbeitsmaschine **1** weist unter anderem ein als Spreuverteiler **19** ausgebildetes Arbeitsorgan **2** auf, welches dazu vorgesehen ist, die beim Erntevorgang erhaltene Spreu auf einem Feld **20** zu verteilen. Der in **Figur 4** im Detail dargestellte Spreuverteiler **19** kann zur Einstellung eines Auswurfwinkels um eine horizontale Achse verschwenkt werden. Weiterhin erfordert der Spreuverteiler in Abhängigkeit einer Auswurfweite der auf dem Feld **20** auszuwerfenden Spreu sowie einer Menge der auszuwerfenden Spreu eine variierende Antriebsleistung.

Um den Spreuverteiler **19** in seiner Position anpassen zu können und eine stufenlose Drehzahlverstellung zu ermöglichen, weist die landwirtschaftliche Arbeitsmaschine **1** einen dem Spreuverteiler **19** zugeordneten hydraulischen Antrieb **3** auf, welcher wiederum mit einer Hydraulikpumpe **29** versehen ist. Um die Hydraulikpumpe **29** des hydraulischen Antriebs **3** antreiben zu können, ist ein Riemenantrieb **5** vorgesehen. Dieser ist dynamisch spannbar ausgebildet. Die landwirtschaftliche Arbeitsmaschine **1** weist somit mechanische als auch hydraulische Elemente zum Antrieb des Spreuverteilers **19** auf.

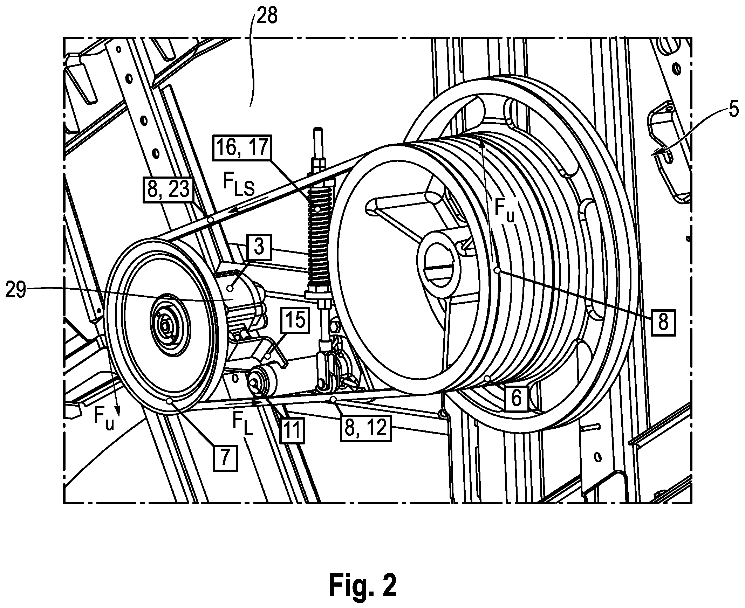

Der Riemenantrieb **5,** welcher besonders gut in den **Figuren 2 bis 5** erkennbar ist, weist eine Antriebsscheibe **6**, eine Abtriebsscheibe **7** und einen Riemen **8** auf. Der Riemen **8** verbindet dabei die beiden Scheiben **6, 7**, indem der Riemen **8** die Scheiben **6, 7** umläuft, wobei der Riemen **8** mit einer Riemenspannung um die beiden Scheiben **6, 7** gespannt ist, sodass ein von der Antriebsscheibe **6** eingeleitetes Drehmoment mittels des Riemens **8** auf die Abtriebsscheibe **7** übertragbar ist. Sowohl die Antriebsscheibe **6** als auch die Abtriebsscheibe **7** sind um eine eigene Drehachse, eine Antriebsdrehachse **9** und eine Abtriebsdrehachse **10,** drehbar gelagert.

Die Hydraulikpumpe **29** ist über ein Halteelement **15** an einem Rahmen **28** der landwirtschaftlichen Arbeitsmaschine **1** angeordnet. Das Halteelement **15** ist dabei verschwenkbar um eine Zwischendrehachse **11** gelagert. Aufgrund der Verbindung der Hydraulikpumpe **29** über das Halteelement **15** ist die Hydraulikpumpe **29** mit ihrer Pumpenwelle **18** verschwenkbar um die Zwischendrehachse **11** gelagert. Gleiches gilt aufgrund der Anordnung der Abtriebsscheibe **7** auf der Pumpenwelle **18** der Hydraulikpumpe **29** für die Abtriebsscheibe **7.** Die Antriebsscheibe **6** hingegen ist ortsfest an dem Rahmen **28** befestigt.

Für den Antrieb der Arbeitsorgane **2,** beispielsweise auch des Spreuverteilers **19,** wird zunächst ein Drehmoment über die Antriebsscheibe **6** in den Riemenantrieb **5** eingeleitet. Bei Betrieb des Riemenantriebs **5** überträgt die Antriebsscheibe **6** dieses mittels des Riemens **8** auf die Abtriebsscheibe **7.** Die Abtriebsscheibe **7** ist dabei - wie in **Figur 2** erkennbar - auf einer Pumpenwelle **18** der Hydraulikpumpe **29** angeordnet, sodass das Drehmoment unmittelbar auf die Pumpenwelle **18** der Hydraulikpumpe **29** übertragbar ist und letztere auf diese Weise angetrieben werden kann. Das Übersetzungsverhältnis zwischen der Antriebsscheibe **6** und der Abtriebsscheibe **7** bestimmt dabei das an der Abtriebsscheibe **7** wirkende Drehmoment. Bei dem in den Figuren gezeigten Riemenantrieb **5** übersteigt ein Durchmesser der Antriebsscheibe **21** einen Durchmesser der Abtriebsscheibe **22,** sodass Lasttrum **12** und Leertrum **23** des Riemens **8** schräg gestellt sind.

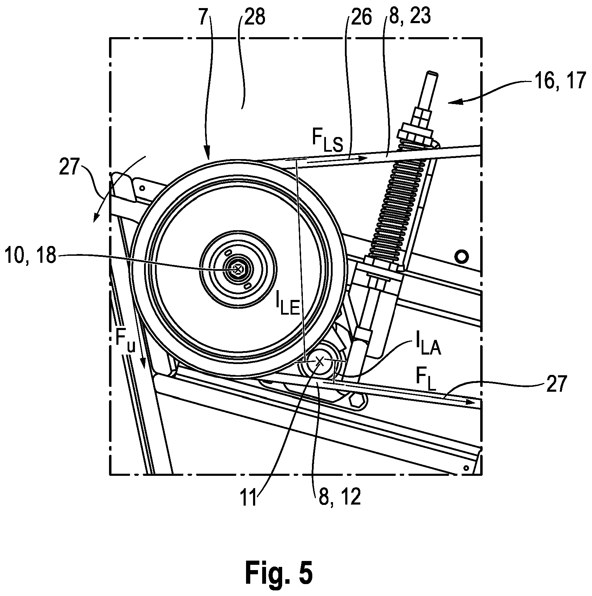

Die von der Antriebsscheibe **6** auf die Abtriebsscheibe **7** zu übertragende Kraft wird als Nutzkraft $F_U$ bezeichnet. Sie führt dazu, dass sich an den beiden Riemenabschnitten des Riemens **8,** nämlich an Lasttrum **12** und am Leertrum **23,** unterschiedliche Kräfte einstellen, die im Folgenden als Lasttrumkraft $F_L$ und Leertrumkraft $F_{LS}$ bezeichnet werden. Die Kräfte sind in den **Figuren 2 und 5** eingezeichnet.

Um zu verhindern, dass der Riemen **8** bei einer Erhöhung der Trumkräfte $F_L$, $F_{LS}$ aufgrund eines Gleitschlupfs durchrutscht, benötigt der Riemen **8** eine gewisse Riemenspannung. Im lastfreien Zustand wirkt zunächst nur die Vorspannkraft $F_V$ im Riemen **8.** Bei Erhöhung der Nutzkraft $F_U$ erhöht sich die Lasttrumkraft $F_L$, während die Leertrumkraft $F_{LS}$ abnimmt. Aufgrund des Drehmomentgleichgewichts entspricht die Differenz von Lasttrumkraft $F_L$ und Leertrumkraft $F_{LS}$ der zu übertragenden Lastkraft $F_U$. Die vorgenannten Zusammenhänge können wie folgt dargestellt werden:

$$F_L = F_V + \frac{F_U}{2}$$

$$F_{LS} = F_V - \frac{F_U}{2}$$

Die lastunabhängige Vorspannkraft $F_V$ wird durch die auf die Hydraulikpumpe **29,** die Abtriebsscheibe **7** und das Halteelemente **15** wirkende Gewichtskraft bestimmt. Hinzu kommt eine durch ein in Form eine Spannfeder **17** ausgebildetes Rückhalteelement **16** erzeugte Spannkraft, die das Halteelement **15** mitsamt der Abtriebsscheibe **7** und der Hydraulikpumpe in Position hält. Die Vorspannkraft $F_V$ gewährleistet, dass die vorgenannten Komponenten auch bei geringer oder nicht vorhandener Last nicht um die Zwischendrehachse **11** verschwenken und auf diese Weise bewirken würden, dass der Riemen **8** entspannt wird und möglicherweise von den Scheiben **6, 7** abspringt. Situationen geringer oder nicht vorhandener Last sind beispielsweise Straßenfahrten, in denen der Spreuverteiler **19** nicht benötigt wird. Gleiches gilt für den abgeschalteten Zustand des Spreuverteilers **19**. In den vorgenannten Situationen befindet sich die Abtriebsscheibe **7** in der Ausgangsposition, in der ein Abstand **4** zwischen der Abtriebsdrehachse **10** und der Antriebsdrehachse **9** minimal ist.

Infolge einer Einleitung eines Drehmoments durch die Antriebsscheibe **6** erfolgt eine Einleitung der Nutzkraft $F_U$, infolgedessen sich die Lasttrumkraft $F_L$ erhöht, während sich die Leertrumkraft $F_{LS}$ in demselben Maße verringert. Dies geschieht zeitweise, wenn seitens des hydraulischen Antriebs **3** eine Eckleistung abgerufen wird, erfordert dann aber auch eine höhere Spannung des Riemens **8**.

Erfindungsgemäß erfolgt die Änderung der Riemenspannung dabei lastabhängig. Um die Riemenspannung dynamisch an die vom Riemen **8** übertragene Leistung anpassen zu können, ist die Abtriebsscheibe **7** verschwenkbar um die Zwischendrehachse **11** gelagert.

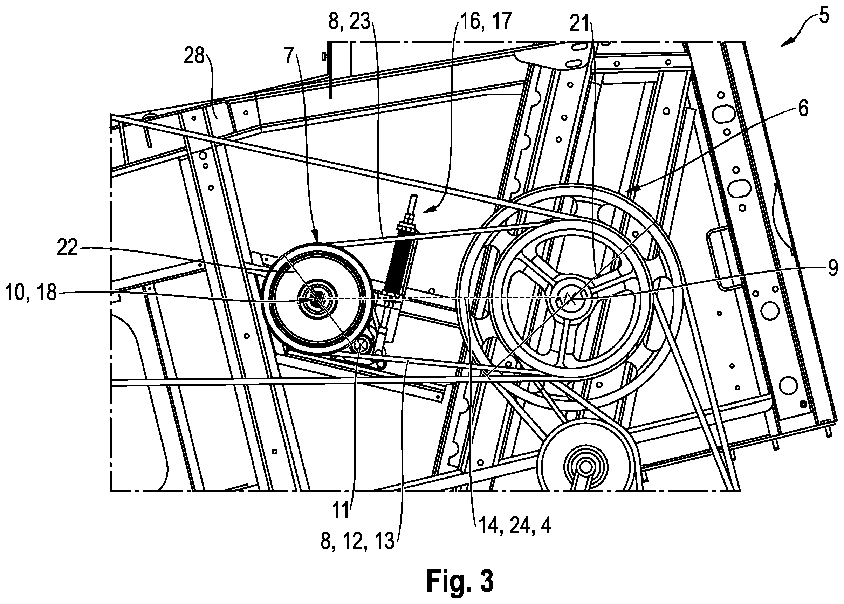

Die Zwischendrehachse **11** ist dabei zwischen den beiden Scheiben **6, 7** angeordnet. Zugleich ist die Zwischendrehachse **11** zwischen einer ersten Geraden **13** und einer zweiten Geraden **14** angeordnet. Die erste Gerade **13** wird dabei durch das Lasttrum **12** in einem gespannten Zustand gebildet, während die zweite Gerade **14** durch eine gedachte Verbindung der Antriebsdrehachse **9** und der Abtriebsdrehachse **10** bestimmt wird, welche in der **Figur 3** mit dem Bezugszeichen **24** versehen ist.

Infolge einer Erhöhung der abgerufenen Last bewirkt eine zunehmende vom Riemen **8** übertragene Nutzkraft $F_U$, dass die Hydraulikpumpe **29** zusammen mit der Abtriebsscheibe **7** um die Zwischendrehachse **11** verschwenkt wird, sodass sich der Abstand **4** zwischen der Abtriebsdrehachse **9** und der Antriebsdrehachse **10** erhöht und der Riemen **8** gespannt wird. Hierbei bewirkt die Änderung der Nutzkraft $F_U$ eine Änderung der Lasttrumkraft $F_L$ und der Leertrumkraft $F_{LS}$. Aufgrund der vorbeschriebenen Anordnung der Zwischendrehachse **11** wird ein Drehmoment bewirkt, welches dazu führt, dass die Abtriebsscheibe **7** mitsamt der Pumpenwelle **18** um die Zwischendrehachse **11** verschwenkt wird.

Die Wirkungslinien **25, 26** der Lastrumkraft $F_L$ als auch der Leertrumkraft $F_{LS}$ sowie die dazugehörigen Abstände $L_{LE}$, $L_{LA}$ zur Zwischendrehachse **11** (Hebelarme) sind in der **Figur 5** eingezeichnet. Das Verhältnis der beiden Kräfte $F_L$, $F_{LS}$ zu den Hebelarmen $L_{LE}$, $L_{LA}$ lässt sich wie folgt ausdrücken:

$$F_{LS} = F_L \cdot \frac{L_{LE}}{L_{LA}}$$

In den Figuren ist die Drehrichtung **27** der Antriebsscheibe **6** dabei entgegen dem Uhrzeigersinn orientiert, sodass sich der Abstand **4** zwischen der Antriebsdrehachse 9 und der Abtriebsdrehachse 10 vergrößert. Auf diese Weise wird die Riemenspannung erhöht.

Vorteilhafterweise wird die Riemenspannung mithin dynamisch und lastabhängig angepasst. Auf diese Weise kann die Riemenspannung zunächst auf den "Normalbetrieb", d.h. wenn der Riemenantrieb **5** gerade nicht auf der Eckleistung des hydraulischen Antriebs läuft, eingestellt werden. Erst bei Erreichen der Eckleistung erfolgt eine automatische Anpassung der Riemenspannung. Spannrollen oder andere Maßnahmen zur Anpassung der Riemenspannung werden mithin nicht benötigt.

Gleichermaßen bewirkt ein Wegfall bzw. einer Verringerung der Nutzkraft eine Überführung der Antriebsscheibe **6** in den in den **Figuren 2 bis 4** gezeigten Ausgangszustand, sodass der Abstand **4** zwischen den beiden Scheiben **6, 7** verringert wird, wodurch die Riemenspannung ebenfalls verringert wird. Auch dieser Vorgang erfolgt vorteilhafterweise automatisch, d.h. ohne händisches Zutun.

**Bezugszeichenliste**

1 Landwirtschaftliche Arbeitsmaschine
2 Arbeitsorgan
3 hydraulischer Antrieb
4 Abstand
5 Riemenantrieb
6 Antriebsscheibe
7 Abtriebsscheibe
8 Riemen
9 Antriebsdrehachse
10 Abtriebsdrehachse
11 Zwischendrehachse
12 Lasttrum
13 erste Gerade
14 zweite Gerade
15 Halteelement
16 Rückhalteelement
17 Spannfeder
18 Pumpenwelle
19 Spreuverteiler
20 Feld
21 Durchmesser der Antriebsscheibe
22 Durchmesser der Abtriebsscheibe
23 Leertrum
24 Verbindung
25 Wirkungslinie der Lasttrumkraft
26 Wirkungslinie der Leertrumkraft
27 Drehrichtung
28 Rahmen
29 Hydraulikpumpe

$L_{LA}$ Hebelarm
$L_{LE}$ Hebelarm
$F_{LS}$ Leertrumkraft
$F_L$ Lasttrumkraft
$F_V$ Vorspannkraft
$F_U$ Nutzkraft

**Patentansprüche**

1.  Landwirtschaftliche Arbeitsmaschine (1), insbesondere Mähdrehscher, umfassend

    - mindestens ein Arbeitsorgan (2) zur Durchführung eines Arbeitsschrittes,
    - mindestens einen hydraulischen Antrieb (3) mit mindestens einer Hydraulikpumpe (29) zum Antreiben des mindestens eines Arbeitsorgans (2),
    - mindestens einen dynamisch spannbaren Riemenantrieb (5) zum Antrieb der Hydraulikpumpe (29), wobei der Riemenantrieb (5)

      ▪ mindestens eine Antriebsscheibe (6) und mindestens eine Abtriebsscheibe (7) sowie mindestens einen die Antriebsscheibe (6) mit der Abtriebsscheibe (7) verbindenden und die beiden Scheiben (6, 7) umlaufenden Riemen (8) umfasst,
      ▪ wobei der Riemen (8) mit einer Riemenspannung um die beiden Scheiben (6, 7) gespannt ist,
      ▪ wobei die Antriebsscheibe (6) drehbar um eine Antriebsdrehachse (9) und die Abtriebsscheibe (7) drehbar um eine Abtriebsdrehachse (10) gelagert sind,

    **dadurch gekennzeichnet, dass**
    die Riemenspannung in Abhängigkeit von einer durch den Riemen (8) übertragenen Last automatisch veränderbar ist.

2.  Landwirtschaftliche Arbeitsmaschine (1) nach Anspruch 1, **dadurch gekennzeichnet, dass** sich die Riemenspannung bei einer Erhöhung der übertragenen Last erhöht und bei einer Verringerung der übertragenen Last verringert.

3.  Landwirtschaftliche Arbeitsmaschine (1) nach Anspruch 1 oder 2, **dadurch gekennzeichnet, dass** die Abtriebsscheibe (7) zusätzlich verschwenkbar um eine Zwischendrehachse (11) gelagert ist, wobei die Zwischendrehachse (11) zwischen einer von einem Lasttrum (12) gebildeten ersten Geraden (13) und einer die Antriebsdrehachse (9) und die Abtriebsdrehachse (10) verbindenden zweiten Geraden (14) angeordnet ist, sodass in Folge einer Erhöhung der von dem Riemen (8) übertragenden Last ein Abstand (4) zwischen der Antriebsdrehachse (9) und der Abtriebsdrehachse (10) veränderbar ist, sodass die Riemenspannung in Abhängigkeit des Drehmoments veränderbar ist.

4.  Landwirtschaftliche Arbeitsmaschine (1) nach einem der vorhergehenden Ansprüche, **dadurch gekennzeichnet, dass** die Abtriebsscheibe (7) mittels eines Halteelements (15) verschwenkbar an der Zwischendrehachse (11) gelagert ist.

5.  Landwirtschaftliche Arbeitsmaschine (1) nach Anspruch 3 oder 4, **gekennzeichnet durch** ein Rückhalteelement (16) zur Fixierung der Abtriebsscheibe (7) in einer Ausgangsposition bei Vorliegen des Riemenantriebs (5) in einem lastfreien Zustand.

6.  Landwirtschaftliche Arbeitsmaschine (1) nach Anspruch 5, **dadurch gekennzeichnet, dass** das Rückhalteelement (16) in Form einer Spannfeder (17) ausgebildet ist.

7.  Landwirtschaftliche Arbeitsmaschine (1) nach einem der Ansprüche 3 bis 6, **dadurch gekennzeichnet, dass** eine Pumpenwelle (18) der Hydraulikpumpe (29) an der Abtriebsscheibe (7) angeordnet ist, sodass das von dem Riemenantrieb (5) zur Verfügung gestellte Drehmoment auf die Pumpenwelle (18) übertragbar und die Hydraulikpumpe (29) somit antreibbar ist.

8.  Landwirtschaftliche Arbeitsmaschine (1) nach einem der vorhergehenden Ansprüche, **dadurch gekennzeichnet, dass** es sich bei dem von der Hydraulikpumpe (29) anzutreibenden Arbeitsorgan (2) um ein positionsveränderliches Arbeitsorgans (2) der landwirtschaftlichen Arbeitsmaschine handelt.

9.  Landwirtschaftliche Arbeitsmaschine (1) nach Anspruch 8, **dadurch gekennzeichnet, dass** es sich bei dem positionsveränderlichen Arbeitsorgan (2) um einen Spreuverteiler (19) der landwirtschaftlichen Arbeitsmaschine (1) handelt.

**Fig. 1**

EP 4 692 595 A1

**Fig. 2**

**Fig. 3**

Fig. 4

Fig. 5

Europäisches
Patentamt

European
Patent Office

Office européen
des brevets

**EUROPÄISCHER RECHERCHENBERICHT**

Nummer der Anmeldung

EP 25 18 7204

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 206 633 821 U (ZOOMLION HEAVY MACHINERY CO LTD) 14. November 2017 (2017-11-14) * Abbildungen 1-5 * ----- | 1,2,8,9 | INV. F16H7/14 A01D41/14 |
| A | US 2015/351324 A1 (SCHIEWER STEFAN [DE] ET AL) 10. Dezember 2015 (2015-12-10) * das ganze Dokument * ----- | 1-9 | |
| A | US 6 834 228 B2 (GATES CORP [US]) 21. Dezember 2004 (2004-12-21) * das ganze Dokument * ----- | 1-9 | |
| A | US 2015/057117 A1 (ANTCHAK JOHN R [CA] ET AL) 26. Februar 2015 (2015-02-26) * das ganze Dokument * ----- | 1-9 | |

RECHERCHIERTE SACHGEBIETE (IPC)

F16H
A01F
A01D

Der vorliegende Recherchenbericht wurde für alle Patentansprüche erstellt

| Recherchenort | Abschlußdatum der Recherche | Prüfer |
|---|---|---|
| München | 13. Oktober 2025 | Hassiotis, Vasilis |

## ANHANG ZUM EUROPÄISCHEN RECHERCHENBERICHT
## ÜBER DIE EUROPÄISCHE PATENTANMELDUNG NR.

EP 25 18 7204

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-10-2025

| Im Recherchenbericht angeführtes Patentdokument | Datum der Veröffentlichung | Mitglied(er) der Patentfamilie | Datum der Veröffentlichung |
|---|---|---|---|
| CN 206633821 U | 14-11-2017 | KEINE | |
| US 2015351324 A1 | 10-12-2015 | DE 102014108026 A1 | 17-12-2015 |
| | | EP 2952087 A1 | 09-12-2015 |
| | | US 2015351324 A1 | 10-12-2015 |
| US 6834228 B2 | 21-12-2004 | AR 037033 A1 | 20-10-2004 |
| | | AT E370355 T1 | 15-09-2007 |
| | | AT E400749 T1 | 15-07-2008 |
| | | AT E464493 T1 | 15-04-2010 |
| | | AU 2002348416 B2 | 15-06-2006 |
| | | BR 0213457 A | 10-05-2005 |
| | | CA 2462800 A1 | 01-05-2003 |
| | | CN 1633566 A | 29-06-2005 |
| | | DE 60221871 T2 | 30-04-2008 |
| | | EP 1438521 A2 | 21-07-2004 |
| | | EP 1564440 A2 | 17-08-2005 |
| | | EP 1881232 A2 | 23-01-2008 |
| | | ES 2289158 T3 | 01-02-2008 |
| | | ES 2307105 T3 | 16-11-2008 |
| | | JP 4251985 B2 | 08-04-2009 |
| | | JP 2005507064 A | 10-03-2005 |
| | | KR 20040048979 A | 10-06-2004 |
| | | MX PA04004912 A | 12-11-2004 |
| | | TR 200400872 T2 | 21-12-2004 |
| | | TW 546447 B | 11-08-2003 |
| | | US 2003083803 A1 | 01-05-2003 |
| | | WO 03036133 A2 | 01-05-2003 |
| US 2015057117 A1 | 26-02-2015 | EP 2707625 A1 | 19-03-2014 |
| | | EP 3323658 A1 | 23-05-2018 |
| | | US 2015057117 A1 | 26-02-2015 |
| | | US 2016230855 A1 | 11-08-2016 |
| | | WO 2013003937 A1 | 10-01-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10312321 A1